# EUROPEAN PATENT APPLICATION

(11) **EP 2 739 043 A1**
(43) Date of publication of application: **04.06.2014**
(21) Application number: 12819673.0
(22) Date of filing: 27.07.2012
(51) Int. Cl.: H04N 7/08, H04N 7/173, H04N 21/236, H04N 21/235

(54) **TRANSMITTING APPARATUS AND METHOD AND RECEIVING APPARATUS AND METHOD FOR PROVIDING A 3D SERVICE THROUGH A CONNECTION WITH A REFERENCE IMAGE TRANSMITTED IN REAL TIME AND ADDITIONAL IMAGE AND CONTENT TRANSMITTED SEPARATELY**

(30) Priority: 29.07.2011 KR 20110075823; 27.07.2012 KR 20120082635
(71) Applicant: Electronics And Telecommunications Research Institute, Daejeon-si 305-700 (KR); University-Industry Cooperation Group of Kyung Hee University, Gyeonggi-do 446-701 (KR)
(72) Inventor: YIM, Hyun Jeong, Seoul 140-868 (KR); YUN, Kug Jin, Daejeon-si 305-759 (KR); LEE, Gwang Soon, Daejeon-si 305-747 (KR); KWON, Hyoung Jin, Cheongju-si, Chungbuk 361-741 (KR); JUNG, Kwang Hee, Namyangju-si, Gyeonggi-do 472-887 (KR); CHEONG, Won Sik, Daejeon-si 305-761 (KR); HUR, Nam Ho, Daejeon-si 305-768 (KR); KIM, Kyu Heon, Yongin-si, Gyeonggi-do 446-701 (KR); LEE, Jang Won, Suwon-si, Gyeonggi-do 443-470 (KR); KANG, Jeon Ho, Seoul 140-133 (KR); PARK, Jong Hwan, Seoul 156-732 (KR); PARK, Gwang Hoon, Seongnam-si, Gyeonggi-do 463-831 (KR); SEO, Duk Young, Seongnam-si, Gyeonggi-do 463-779 (KR)
(74) Representative: Betten & Resch
(86) International application number: PCT/KR2012/006045
(87) International publication number: WO 2013/019042

(57) **Abstract**

According to the present invention, a transmission apparatus and method and a reception method and apparatus for providing a 3D service are disclosed. The transmission method for providing the 3D service while making a reference image transmitted in real-time interwork with an additional image transmitted separately from the reference image includes a real-time reference image stream generating step of generating a real-time reference image stream based on the reference image and transmitting the generated real-time reference image stream to a receiving side in real-time and an additional image transmitting step of transmitting the additional image providing the 3D service in interworking with the reference image to the receiving side separately from the reference image stream, wherein the real-time reference image stream includes a linkage information, which is information relating to the additional image to be interworking with the reference image and synchronization information for synchronization with the reference image and the additional image and content.

## Description

### [Technical Field]

The present invention relates to a transmission apparatus and method and a reception apparatus and method for providing a 3D service, and more specifically to a transmission apparatus and method and a reception apparatus and method for providing a 3D service while making a reference image transmitted in real-time interwork with an additional image and content transmitted separately from the reference image.

### [Background Art]

Recent convergence between broadcast and communication, together with spreading customer terminals whose number reaches five millions, leads to customers' easy access to contents and various and easy-to-use storage mechanisms. Accordingly, storage and consumption of entertainment contents through a personal media player become popular.

In response to demand for access to such contents, the ATSC (Advanced Television Systems Committee), a U.S. organization to develop digital TV broadcast standards, has announced "NRT" as a new service model. NRT, which stands for Non-Real-Time, refers to a service that allows viewers to download their desired contents during an idle time when they do not watch TV and consume the contents later. However, current paradigm for broadcast services is shifting to the ones requiring more data transmission, such as UHD service or 3D TV service. However, existing broadcast systems exhibit their limitations to transmission of mass data, and thus, demand for hybrid transmission is increasing.

To address such transmission limitation of the existing broadcast networks, the present invention suggests a system of providing a high-quality 3D service by transferring contents using a transmission network other than broadcast networks and making the transferred contents interwork with contents transmitted in real-time.

### [Disclosure]

### [Technical Problem]

An object of the present invention is to provide a transmission apparatus and method and a reception apparatus and method for providing a 3D service by making a reference image transmitted in real-time interwork with an additional image and content transmitted separately from the reference image, which may provide a high-quality 3D service by performing interworking between a predetermined 2D image file and a real-time received stream 2D content to implement a 3D interworking service.

Another object of the present invention is to provide a transmission apparatus and method and a reception apparatus and method for providing a 3D service by making a reference image transmitted in real-time interwork with an additional image and content transmitted separately from the reference image, which provides a reference relationship between two images to provide interworking between two contents which are received at different time points, provides frame synchronization for offering a stereoscopic video service, and inserts time information for synchronization between frames and a signaling scheme for the reference relationship between the two images so that the frame synchronization may be used for conventional broadcast systems, thereby implementing a high-quality 3D service.

### [Technical Solution]

To achieve the above objects, a transmission method for providing a 3D service while making a reference image transmitted in real-time interwork with an additional image and content transmitted separately from the reference image may include a real-time reference image stream generating step of generating a real-time reference image stream based on the reference image and transmitting the generated real-time reference image stream to a receiving side in real-time and an additional image and content transmitting step of transmitting the additional image and content providing the 3D service in interworking with the reference image to the receiving side separately from the reference image stream, wherein the real-time reference image stream includes linkage information, which is information relating to the additional image and content to be interworking with the reference image and synchronization information for synchronization with the reference image and the additional image and content.

The additional image and content may be transmitted in real-time or in non-real-time in the form of a stream or a file.

The linkage information may include at least one of a descriptor tag (descriptor_tag) for identifying an linkage descriptor which is a descriptor relating to the linkage information; descriptor length information (descriptor_length) indicating a length of the linkage descriptor; linkage media count information (linkage_media_number) indicating the number of files and streams to be interworking, which are included in the linkage descriptor; media index id information (media_index_id) which is an id value that may identify the file and stream to be interworking; wakeup time information (start_time) indicating a service start time of the file and stream to be interworking; linkage URL information (linkage_URL) indicating URL information of the file and stream to be interworking; URL length information (linkage_URL_length) indicating a length of the URL information; and linkage media type information (linkage_media_type) indicating the type of the file and stream to be interworking.

The synchronization information may include at least one of a synchronization information identifier which is information for identifying the synchronization information; a 3D discerning flag (2D_3D_flag) for discerning whether the type of a service currently supported by a broadcast stream is in 2D or in 3D; media index id information (media_index_id) which is an id value that may identify the file and stream to be interworking; and frame number information (frame_number) indicating a counter value for figuring out a playback time for interworking between the reference image and the additional image and content.

The real-time reference image stream generating step may include a video encoding step of encoding the reference image to generate a reference image stream; a PES packetizing step of packetizing the reference image stream to generate a PES packet; a PSI/PSIP generating step of generating a PSI/PSIP (Program Specific Information/Program and System Information Protocol) based on the linkage information; and a multiplexing step of multiplexing the PSI/PSIP and the PES packet to generate the real-time reference image stream.

The video encoding step may include a step of encoding the reference image to generate an MPEG-2 image stream, wherein the multiplexing step includes a step of multiplexing the PSI/PSIP and the PES packet to generate an MPEG-2 TS stream.

The additional image and content transmitting step may include a video encoding step of encoding the additional image and content to generate a basic stream; and a file/stream generating step of generating an additional image file or an additional image stream to be appropriate for a transmission type based on the basic stream, wherein the video encoding step or the file/stream generating step includes a step of generating the synchronization information or a step of generating the linkage information.

The file or stream generating step may include a step of generating the basic stream in one of an MP4 format and a TS format, wherein the generated additional image file or additional image stream is transmitted to the receiving side in real-time or in non-real-time.

The synchronization information may be packetized by a first PES packetizing means that packetizes the reference image stream and a separate PES packetizing means different from the first PES packetizing means and transmitted in a separate stream or may be included in a header of the PES packet through the first PES packetizing means or packetized or is included in a video sequence and encoded.

The reference image may be packetized together with information that may identify a start time point of the 3D service for synchronization between the reference image and the synchronization information.

The linkage information may be included in at least one of a VCT (Virtual Channel Table) and an EIT (Event Information Table) of a PSIP of the real-time reference image stream and a PMT (Program Map Table) of an MPEG-2 TS PSI.

To achieve the above objects, a transmission apparatus for providing a 3D service while making a reference image transmitted in real-time interwork with an additional image and content transmitted separately from the reference image may include a real-time reference image stream generating unit generating a real-time reference image stream based on the reference image and transmitting the generated real-time reference image stream to a receiving side in real-time and an additional image and content transmitting unit transmitting the additional image and content providing the 3D service in interworking with the reference image to the receiving side separately from the reference image stream, wherein the real-time reference image stream includes a linkage information, which is information relating to the additional image and content to be interworking with the reference image and synchronization information for synchronization with the reference image and the additional image and content.

The additional image and content may be transmitted in real-time or in non-real-time in the form of a stream or a file.

To achieve the above objects, a reception method for providing a 3D service while making a reference image transmitted in real-time interwork with an additional image and content transmitted separately from the reference image may include a reference image generating step of performing de-multiplexing and decoding on a real-time reference image stream received in real-time to generate a reference image of the 3D service; an additional image generating step of receiving an additional image stream or an additional image file relating to the additional image and content providing the 3D service in interworking with the reference image separately from the reference image stream and decoding the received additional image stream or additional image file to thereby generate the additional image; and a rendering step of rendering back a 3D stereoscopic image based on the reference image and the additional image, wherein the reference image generating step and the additional image generating step includes a step of performing decoding while synchronization is done based on linkage information which is information relating to the additional image and content to be interworking with the reference image and synchronization information for synchronization with between the reference image and the additional image, which are included in the real-time reference image stream.

The reference image generating step may include a PSI/PSIP decoding step of decoding a PSI/PSIP (Program Specific Information/Program and System Information Protocol) included in the real-time reference image stream to extract a PES packet and the linkage information; a PES parsing step of parsing the PES packet to generate a reference image stream constituted of a video ES; and a video decoding step of decoding the reference image stream to generate the reference image.

The synchronization information may be obtained from the synchronization information stream through a first PES parsing means that parses the PES packet to generate the reference image stream and a separate parsing means different from the first PES parsing means, obtained by a header of the PES packet through the first PES parsing means, or obtained from the reference image stream.

The PSI/PSIP decoding step may analyze configuration information of the reference image stream included in a PMT (Program Map Table) of a PSI/PSIP included in the real-time reference image stream, extract information on whether a corresponding image is the reference image or the additional image and information on whether the corresponding image is a left or right image, and extract the linkage information through an linkage descriptor included in at least one of a VCT (Virtual Channel Table) and an EIT (Event Information Table) of the PSIP and a PMT of an MPET-2 TS PSI.

The additional image generating step may include a receiving/storing step of receiving and storing the additional image stream or the additional image file and the linkage information; a file/stream parsing step of receiving the synchronization information generated in the reference image generating step and generating a video ES-type basic stream based on one of an additional image stream and file relating to the additional image matching the reference image; and a video decoding step of decoding the generated video ES-type basic stream to generate the additional image.

The receiving/storing step may include a step of identifying the stream and file to be interworking through linkage media type information (linkage_media_type) indicating the type of the stream and file to be interworking of the linkage information and linkage URL information (linkage_URL) indicating URL information storing the stream and file to be interworking.

To achieve the above objects, a reception apparatus for providing a 3D service while making a reference image transmitted in real-time interwork with an additional image and content transmitted separately from the reference image may include a reference image generating unit performing de-multiplexing and decoding on a real-time reference image stream received in real-time to generate a reference image of the 3D service; an additional image generating unit receiving an additional image stream or an additional image file relating to the additional image and content providing the 3D service in interworking with the reference image separately from the reference image stream and decoding the received additional image stream or additional image file to thereby generate the additional image; and a rendering unit rendering a 3D stereoscopic image based on the reference image and the additional image, wherein the reference image generating unit and the additional image generating unit perform decoding while synchronization is done based on linkage information which is information relating to the additional image and content to be interworking with the reference image and synchronization information for synchronization with between the reference image and the additional image, which are included in the real-time reference image stream.

### [Advantageous Effects]

According to the transmission apparatus and method and the reception apparatus and method for providing a 3D service while making a reference image transmitted in real-time interwork with an additional image and content transmitted separately from the reference image, in a hybrid environment of real-time broadcast, non-real-time broadcast, and previously stored non-real-time transmission, the reference relationship between two images and synchronization information are specified in the two image technology standards, so that time information is inserted for synchronization between frames and a signaling scheme for the reference relationship between two images, thereby constituting a high-quality 3D service.

Further, the transmission apparatus and method and the reception apparatus and method for providing a 3D service while making a reference image transmitted in real-time interwork with an additional image and content transmitted separately from the reference image become a basis for technologies that may constitute a stereoscopic video through synchronization between two images having different formats, which are received at different times and may provide an interworking-type service utilizing storage media.

### [Description of Drawings]

Fig. 1 is a block diagram illustrating a system of providing a 3D service in interworking with contents transmitted or received in non-real time in a real-time service environment according to an embodiment of the present invention, wherein real-time and non real-time transmission is performed from a transmission end to a reception end.
Fig. 2 is a view illustrating an linkage descriptor for providing a 3D service while a real-time transmitted reference image interworks with an additional image and content transmitted separately according to an embodiment of the present invention.
Fig. 3 is a view illustrating a synchronization information descriptor for providing a 3D service while a real-time transmitted reference image interworks with an additional image and content transmitted separately according to an embodiment of the present invention.
Fig. 4 is a block diagram for describing a process of generating a real-time reference image stream and an additional image stream or file of a transmission apparatus for providing a 3D service while a real-time transmitted reference image and a separated transmitted additional image interwork with each other according to an embodiment of the present invention.
Fig. 5A is a block diagram illustrating a configuration in which an additional image and content transmission unit transmits an additional image stream to a receiving apparatus through a broadcast network according to an embodiment of the present invention.
Fig. 5B is a block diagram illustrating a configuration in which an additional image and content transmission unit transmits an additional image or additional image file to a receiving apparatus through an IP network according to another embodiment of the present invention.
Fig. 6 is a block diagram illustrating a configuration of a transmission apparatus for providing a 3D service while a real-time-transmitted reference image and a separately transmitted additional image interwork with each other according to an embodiment of the present invention.
Fig. 7 is a block diagram illustrating a configuration of a transmission apparatus for providing a 3D service while making a real-time transmitted reference image and a separately transmitted additional image and content interwork with each other according to another embodiment of the present invention.
Fig. 8 is a view illustrating an example where synchronization information 802 is included in a PES packet header 800 in a transmission apparatus for providing a 3D service while making a real-time transmitted reference image and a separately transmitted additional image and content interwork with each other according to another embodiment of the present invention.
Fig. 9 is a block diagram illustrating a configuration of a transmission apparatus for providing a 3D service while making a real-time transmitted reference image and a separately transmitted additional image and content interwork with each other according to still another embodiment of the present invention.
Fig. 10 is a block diagram for describing a process of generating a reference image and an additional image in a receiving apparatus for providing a 3D service while making a real-time transmitted reference image and a separately transmitted additional image and content interwork with each other according to an embodiment of the present invention.
Fig. 11 is a block diagram illustrating a configuration of a receiving apparatus for providing a 3D service in interworking with content received in non-real-time in a real-time broadcast service environment according to an embodiment of the present invention.
Fig. 12 is a block diagram illustrating a configuration of a receiving apparatus for providing a 3D service in interworking with content received in non-real-time in a real-time broadcast service environment according to another embodiment of the present invention.
Fig. 13 is a block diagram illustrating a configuration of a receiving apparatus for providing a 3D service in interworking with content received in non-real-time in a real-time broadcast service environment according to still another embodiment of the present invention.

### [Best Mode]

Various changes and alterations may be made to the present invention. Hereinafter, exemplary embodiments of the present invention will be described in detail with reference to the accompanying drawings.

However, the present invention is not limited to the embodiments and should be construed as including all the changes, equivalents, and substitutes as included in the spirit and scope of the present invention.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention. Similarly, the second component may be named as the first component. As used herein, the term "and/or" includes any and all combinations of one or more of the associated listed items.

It will be understood that when an element or layer is referred to as being "on", "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present.

The terminology used herein is for the purpose of describing particular embodiments only and is not intended to be limiting of the invention. The expression of the singular number in the specification includes the meaning of the plural number unless the meaning of the singular number is definitely different from that of the plural number in the context.

In the following description, the term 'include' or 'have' may represent the existence of a feature, a number, a step, an operation, a component, a part or the combination thereof described in the specification, and may not exclude the existence or addition of another feature, another number, another step, another operation, another component, another part or the combination thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted.

As used herein, the relationship between a reference image and an additional image for configuring a high-quality stereoscopic video and functions of a receiving terminal are assumed as follows. The 3D reference image may be transmitted in real time according to MPEG-2 TS technology standards, and the additional image may be previously transmitted according to ASC NRT technology standards. Further, the receiving terminal should be able to recognize and analyze linkage information and synchronization information included in the reference image due to differences in receiving time points and formats of the images.

Although the broadcast service using MPEG-2 TS and NRT technologies is herein described, the technical field is not necessarily limited thereto, and the invention may apply to all the areas in which images constituting 3D contents lack association information and synchronization information between the images due to a difference in receiving time points.

Further, as used herein, the "additional image" is not necessarily limited to video information for providing the additional image, and may also expand to contents as well as the additional image.

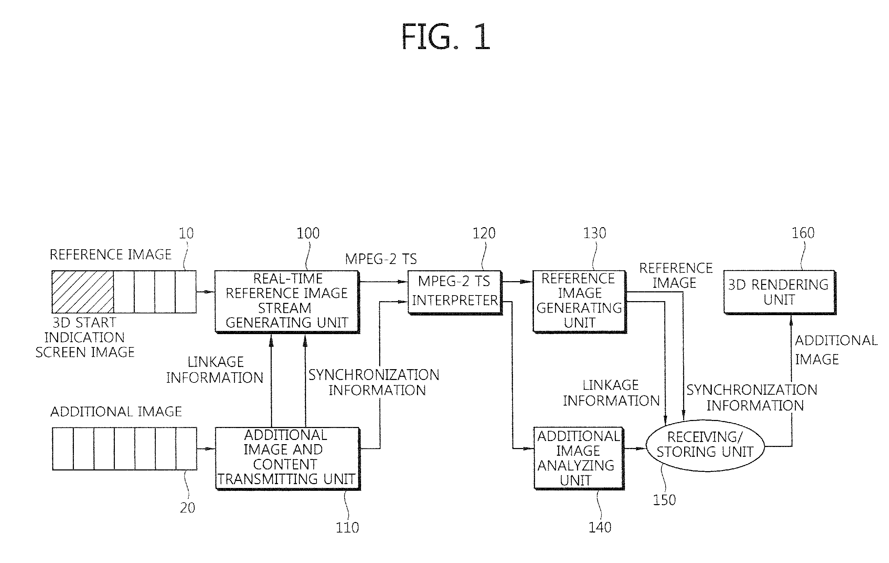

Fig. 1 is a block diagram illustrating a system of providing a 3D service in interworking with contents transmitted or received in non-real time in a real-time service environment according to an embodiment of the present invention, wherein real-time and non real-time transmission is performed from a transmission end to a reception end. As shown in Fig. 1, the 3D service providing system according to an embodiment of the present invention may include a real-time reference image stream generating unit 100, an additional image and content transmitting unit 110, an MPEG-2 TS interpreter 120, a reference image generating unit 130, an additional image analyzing unit 140, a receiving/storing unit 150, and a 3D rendering unit 160.

Referring to Fig. 1, the transmission end transmits the reference image to the MPEG-2 TS interpreter 120 through the additional image and content transmitting unit 110. The transmission end transmits the content and the additional image 20, which is to be transmitted according to ATSC NRT standards, through the additional image and content transmitting unit 110. However, the additional image 20 and content may be transmitted via a broadcast network or an IP network in real time, as well as following the ATSC NRT standards. Here, the additional image 20 means a 2D image that provides for a 3D service in interworking with the reference image 10 which is a 2D image content.

The additional image 20 may be encoded based on an NRT standard in an NRT transmission server and may be transmitted in the format of an MPEG-2 TS in non-real time to the MPEG-2 TS interpreter 120. However, the format is not limited to the MPEG-2 TS. The transmission may be done in another format that enables non-real time stream transmission. At this time, due to differences in receiving time points and image formats of the images, the additional image and content transmitting unit 110 transfers linkage information and synchronization information to the real-time reference image stream generating unit 100. When the reference image 10 is generated as a real-time reference image stream, the real-time reference image stream generating unit 100 may insert 3D start indication screen information to clarify the time point that the 3D service starts to be provided.

The MPEG-2 TS interpreter 120 transfers the real-time reference image stream to the reference image generating unit 130 and the additional image and its relating stream or file to the additional image analyzing unit 140. The real-time transmitted additional image stream is transferred from the additional image analyzing unit 140 to the receiving/storing unit 150, enters the 3D rendering unit 160 in real time, and is output as a 3D stereoscopic image.

On the contrary, the non-real-time stream or file is stored in the receiving/storing unit 150 via the additional image analyzing unit 140. The real-time reference image stream is decoded to the reference image 10 via the reference image generating unit 130 and is transferred to the 3D rendering unit 160. At this time, as included in the real-time reference image stream and transmitted in the transmission end, the linkage information and synchronization information included in the received real-time reference image stream are extracted and transferred to the receiving/storing unit 150. The receiving/storing unit 150 searches for the additional image 20 that is synchronized with the reference image 10 and the additional image-related stream or file that is to interwork with the reference image 10 based on the synchronization information and linkage information and transfers the searched additional image 20 to the 3D rendering unit 160 so that a stereoscopic image may be output on the screen.

According to an embodiment of the present invention, the linkage information may be positioned in EIT (Event Information Table) or VCT (Virtual Channel Table) of PSIP (Program and System Information Protocol) of the real-time reference image stream and in PMT (Program Map Table) of MPEG-2 TS (Transport Stream) PSI (Program Specific Information).

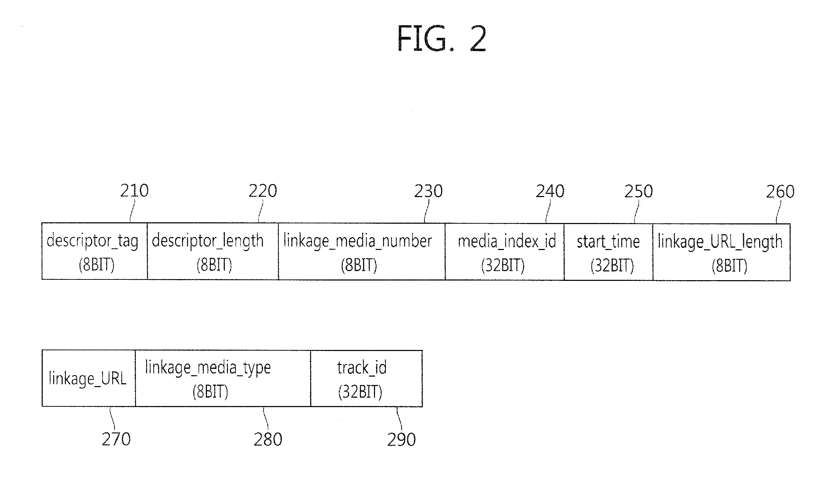

Fig. 2 is a view illustrating an linkage descriptor for providing a 3D service while a real-time transmitted reference image interworks with an additional image and content transmitted separately according to an embodiment of the present invention. As shown in Fig. 2, the linkage descriptor may include a descriptor tag 210 (descriptor_tag), descriptor length information 220 (descriptor_length), linkage media count information 230 (linkage_media_number), media index id information 240 (media_index_id), wakeup time information 250 (start_time), URL length information 260 (linkage_URL_length), linkage URL information 270 (linkage_file_URL), linkage media type information 280 (linkage_media_type), and a track ID 290 (track_id). Further, the linkage descriptor may include only some of the above types of information but not all.

Referring to Fig. 2, the linkage descriptor may include, as a descriptor relating to the linkage information, the number, URL information, and type of streams or files to be interworking. This may be represented in syntaxes as follows:

**[Table 1]**

| Syntax | No. of Bits | Semantics |
|---|---|---|
| linkage_info_descriptor() { | | |
| descriptor_tag (210) | 8 | Linkage information identifier |
| descriptor_length (220) | 8 | Length of descriptor |
| linkage_media_number (230) | 8 | Number of streams or files to be interworking |
| for(i=1: i<linked_media_number; | | |
| i++) { | | Id value of stream or file to be interworking |
| media_index_id (240) | 8 | Start time of stream or file to be interworking |
| start_time (250) | 32 | Length of name of stream or file to be |
| linkage_URI_length(260) | 8 | interworking |
| for(i=0; i<linkage_ | | |
| URI_length; i++ { | | Name of stream or file to be interworking |
| linkage_URI (270) | Var | |
| } | | Type of stream or file to be interworking |
| linkage_media_type (280) | 8 | |
| if(linked_media_type == | | |
| mp4){ | | |
| track_id (290) | 32 | |
| }else{ | | |
| reserved | 32 | |
| } | | |
| } | | |
| } | | |

Referring to Fig. 2 and Table 1, first, the descriptor tag 210, which is the first information included in the linkage descriptor is used to identify the linkage descriptor. The descriptor tag 210 may have a length of 8 bits.

Next, the descriptor length information 220 represents the length of the linkage descriptor. The descriptor length information 220 may have a length of 8 bits.

The linkage media count information 230 refers to the number of streams or files to be interworking, which are included in the linkage descriptor. The linkage media count information 230 may also have a length of 8 bits.

When the number of linkage media is larger than i (where, i has 1 as its initial value and increases by 1 for each loop), the following information may be further displayed.

First, the media index id information 240 refers to an ID value to be able to identify a stream or file to be interworking. The media index id information 240 may have a length of 8 bits.

The wakeup time information 250 refers to the start time of a stream or file to be interworking. The wakeup time information 250 may have a length of 32 bits.

The URL length information 260 refers to the length of the name of a stream or file to be interworking. The URL information of a stream or file to be interworking has a variable length, and thus, the length of the URL information of the stream or file to be interworking may be known at the reception end through the URL length information 260. The URL length information 260 may have a length of 8 bits.

The linkage URL information 270 refers to the name of a stream or file to be interworking. The stream or file to be interworking may be transmitted in real-time or may be previously stored in the receiving terminal through an NRT service, so that the URL information of the stream or file to be interworking is needed. Accordingly, it is possible to identify the URL information of the stream or file to be interworking with the reference image stream through the linkage URL information 270. The linkage URL information 270 may have variable bit values.

The linkage media type information 280 refers to the type of a stream or file to be interworking with the reference image. According to an embodiment of the present invention, the additional image to be used for a 3D service may be generated in the format of an MP4 file. However, the linkage media type information 280 may configure a field so that the type of the stream or file may be expanded in consideration of diversity of the format of the stream or file generated based on the additional image.

The track ID 290 refers to a track ID of a stream or file to be interworking when the stream or file has a specific file type, such as MP4. The track ID 290 may have a length of 32 bits.

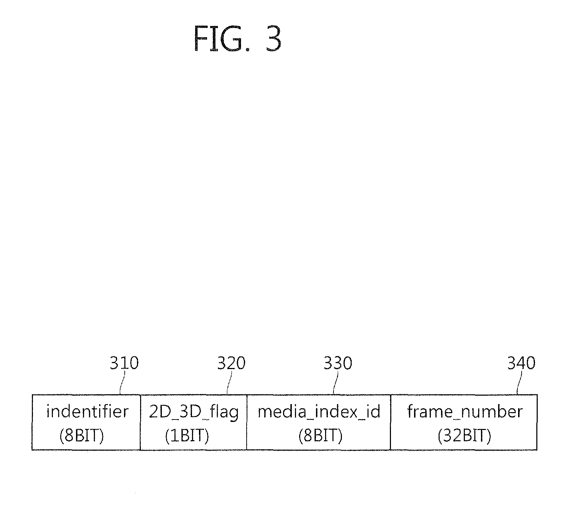

Fig. 3 is a view illustrating a synchronization information descriptor for providing a 3D service while a real-time transmitted reference image interworks with an additional image and content transmitted separately according to an embodiment of the present invention. As shown in Fig. 3, the synchronization information descriptor may include a synchronization information identifier 310 (identifier), a 3D discerning flag 320 (2D_3D_flag), media index id information 330 (media_index_id), and frame number information 340 (frame_number). The synchronization information descriptor may include only some of the types of information but not all.

Since the reference image is transmitted in real-time, and the additional image is transmitted in real-time or previously transmitted in non-real-time, synchronization between contents is inevitable to configure a stereoscopic video. Accordingly, synchronization information needs to be included that applies to both the reference image and the additional image so that the two contents are synchronized with each other.

Referring to Fig. 3, the synchronization information (also referred to as "timing information), which is synchronization information between the reference image and the additional image, may be included in the real-time reference image stream in different manners and transmitted. Hereinafter, a few embodiments are described. The synchronization information may be included in the MPEG-2 image stream or the private data section of the PES header, or may be defined as a new stream, which may be transmitted in the form of a TS packet having a separate PID (Packet Identifier). The synchronization information may be represented in syntaxes.

**[Table 2]**

| Syntax | No. of Bits | Semantics |
|---|---|---|
| Timing information(){ | | |
| Identifier (310) | 8 | Synchronization information identifier |
| Reserved | 7 | |
| 2D_3D_flag (320) | 1 | Flag to discern 2D from 3D |
| if(2D_3D_flag){ | | In case of 3D image |
| media_index_id (330) | 8 | Id value of stream or file to be interworking with reference image |
| frame_number (340) | 32 | count of corresponding image |
| } | | |
| else{ | | |
| reserved | | |
| } | | |
| } | | |

Referring to Fig. 3 and Table 2, the timing information is synchronization information transmitted through the payload of the real-time reference image stream. The synchronization information includes the synchronization information identifier 310. The synchronization information identifier 310 represents that the synchronization information is present after the synchronization information identifier 310. The synchronization information identifier 310 may have a length of 8 bits.

The 3D discerning flag 320 identifies whether consumption information of a broadcast stream currently transmitted is in 2D or 3D. The 3D discerning flag 320 may have a length of 1 bit. For example, if the 3D discerning flag 320 has a value of '1', the currently transmitted stream is a stream for providing a 3D service, and if the 3D discerning flag 320 has a value of '0', the currently transmitted stream is a stream for providing a 2D service.

If the 3D discerning flag 320 represents that the stream is to provide a 3D service, the following information may be further included.

The media index id information 330 refers to an id value for identifying a stream or file to be interworking with the reference image. The linkage descriptor illustrated in Fig. 2 includes as many streams or files to be interworking as the number indicated by the linkage media count information 230, and the media index id information 330 may be used in the synchronization information to distinguish the streams or files from each other. In the loop below the linkage media count information 230 field of the linkage descriptor, i refers to the media index id information 330. First values define the media index id information 330 as 1. Whenever the loop re-operates, the value of the media index id information 330 increases by 1. The media index id information 330 may have a length of 8 bits.

The frame number information 340 refers to a counter value for figuring out a time point of playback for interworking between the reference image and the additional image. That is, if reference image pictures are counted and interworking for a 3D service is performed from an ith picture, the synchronization information including information on the number 'i' may be transmitted to the frame number information 340. The additional image also includes a counter value. The frame number information 340 may have a length of 32 bits.

According to an embodiment of the present invention, there is an advantage that the reception end may perform synchronization with a tiny amount of information by using the frame number information 340 and the media index id information 330. The synchronization information may be transmitted in a separate stream.

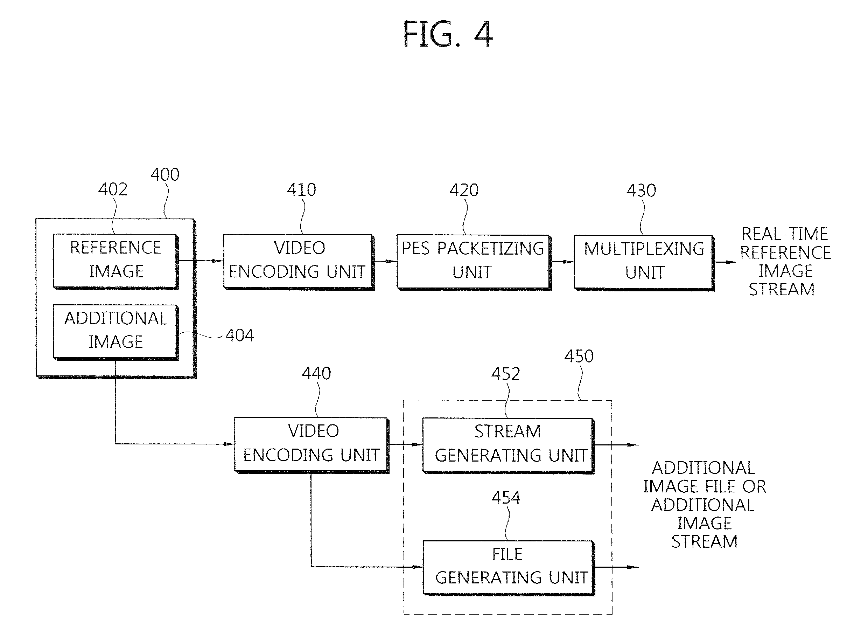

Fig. 4 is a block diagram for describing a process of generating a real-time reference image stream and an additional image stream or file of a transmission apparatus for providing a 3D service while a real-time transmitted reference image and a separated transmitted additional image interwork with each other according to an embodiment of the present invention. Referring to Fig. 4, the transmission apparatus according to an embodiment of the present invention may include a real-time reference image stream generating unit including an image storing unit 400, a video encoding unit 410, a PES packetizing unit 420, and a multiplexing unit 430 and an additional image and content transmission unit including a video encoding unit 440 and a file/stream generating unit 450.

Referring to Fig. 4, in relation to a reference image 402, the real-time reference image stream generating unit encodes, packetizes, and multiplexes the reference image 402 to generate a real-time reference image stream. The reference image 402 is stored in the image storing unit 400 together with an additional image 404.

The video encoding unit 410 receives the reference image 402 from the image storing unit 400 and encodes the received reference image 402 to thereby generate a reference image stream. According to an embodiment of the present invention, the video encoding unit 410 may be an MPEG-2 image encoder and the reference image 402 may be encoded in an MPEG-2 image stream.

The PES packetizing unit 420 receives the reference image stream from the video encoding unit 410 and packetizes the received reference image stream to thereby generate a PES packet. At this time, the PES packetizing unit 420 inserts a 3D start indication screen image in the reference image 402 for synchronization with the reference image 402 with respect to the start time point of 3D broadcast.

The multiplexing unit 430 receives a reference image-related PES packet from the multiplexing unit 430 and receives PSI/PSIP from a PSI/PSIP generating unit (not shown) and multiplexes the received packet and PSI/PSIP to thereby generate a real-time reference image stream. The multiplexing unit 430 may generate the real-time reference image stream in the format of an MPEG-2 TS packet.

In relation to the additional image 404, the additional image and content transmission unit encodes the additional image 404 and content, generates a stream or file, and multiplexes the generated stream or file, thereby generating an additional image stream or additional image file.

The video encoding unit 440 receives the additional image 404 and content from the image storing unit 400 and encodes the received image and content to thereby generate a basic stream. According to an embodiment of the present invention, the basic stream may have a video ES form.

A file/stream generating unit 460 generates an additional image stream or file based on the basic stream generated based on the additional image 404 and content from the video encoding unit 440. A stream generating unit 462 may be a muxer and multiplexes the basic stream to thereby generate the additional image stream. According to an embodiment of the present invention, the additional image stream may be an MPEG-2 TS stream.

The additional image stream may be transmitted in real-time in a streaming transmission type. A file generating unit 464 generates an additional image file based on the basic stream. According to an embodiment of the present invention, the file may be an MP4 file. The additional image file may be received in real-time and played back right away, or may be previously transmitted in non-real-time and stored in the reception end and may then generate a 3D stereoscopic image in interworking with the reference image 402 transmitted in real-time.

Although not shown in the drawings, the real-time reference image stream generating unit and the additional image and content transmission unit include a transmission unit and transmits the stream or file generated through the multiplexing unit 430 and the file/stream generating unit 460.

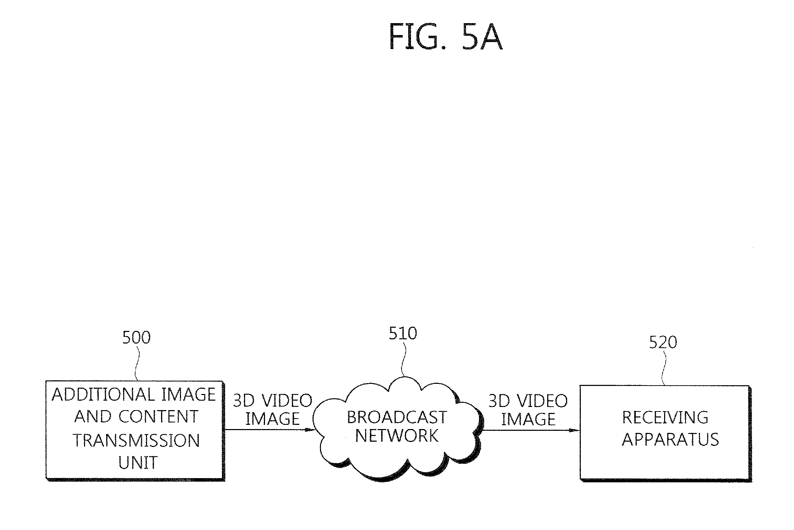

Fig. 5A is a block diagram illustrating a configuration in which an additional image and content transmission unit transmits an additional image stream to a receiving apparatus through a broadcast network according to an embodiment of the present invention. As shown in Fig. 5A, the additional image and content transmission unit 500 may transmit an additional image stream to the receiving unit 520 through the broadcast network 510. At this time, the transmission may be performed in a streaming type. According to this embodiment, although the reference image and the additional image is simultaneously transmitted to the receiving apparatus 520 in real-time, the reference image and the additional image is transmitted in separate streams. Accordingly, synchronization may be achieved between the real-time-transmitted reference image and the additional image by including linkage information and synchronization information in the stream or by transmitting the linkage information and the synchronization information in separate streams.

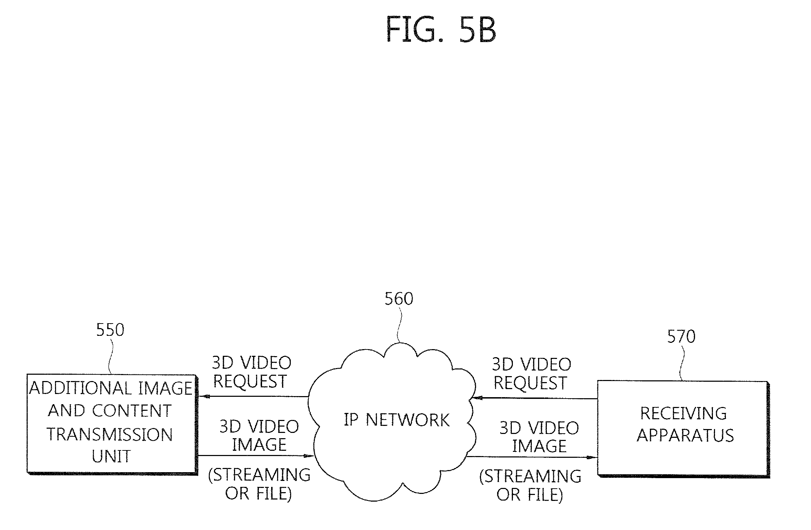

Fig. 5B is a block diagram illustrating a configuration in which an additional image and content transmission unit transmits an additional image or additional image file to a receiving apparatus through an IP network according to another embodiment of the present invention. As shown in Fig. 5B, the additional image and content transmission unit 550 may transmit the additional image to the receiving apparatus 570 through the IP network 560.

At this time, the receiving apparatus 570 may send a request for transmission of an additional image to the additional image and content transmission unit 550 through the IP network 560. Upon receiving the request, the additional image and content transmission unit 550 transmits the additional image in the form of streaming or a file in response. In the case of streaming transmission, real-time transmission may be conducted. Or, non-real-time transmission may be done as well. In the case of the file, the file may be transmitted in real-time or non-real-time. According to an embodiment of the present invention, even without a separate request, the additional image and content may be transmitted to the receiving apparatus 570.

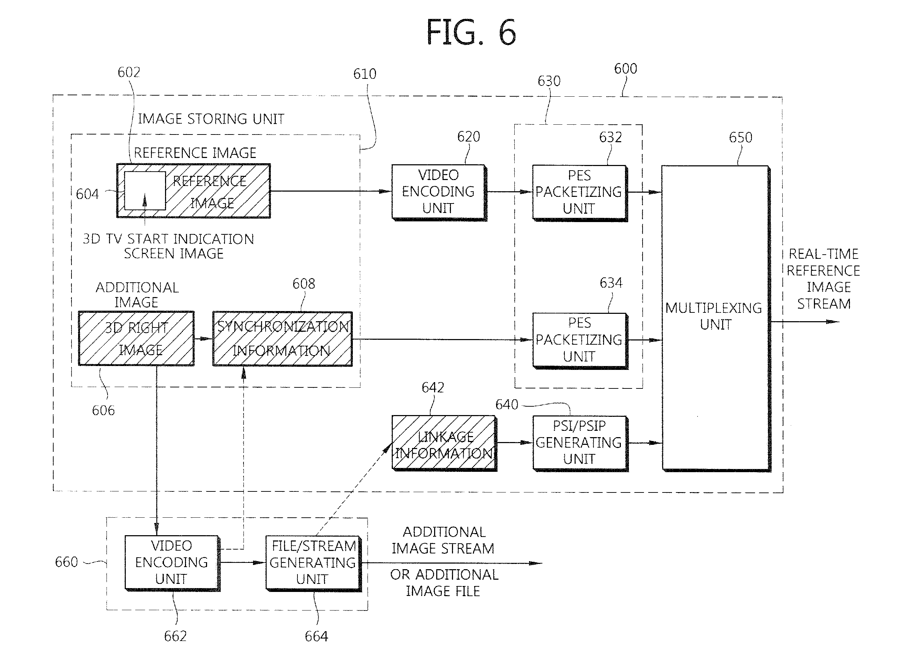

Fig. 6 is a block diagram illustrating a configuration of a transmission apparatus for providing a 3D service while a real-time-transmitted reference image and a separately transmitted additional image interwork with each other according to an embodiment of the present invention. As shown in Fig. 6, the transmitting apparatus for providing a 3D service according to an embodiment of the present invention may include a real-time reference image stream generating unit 600 and an additional image and content transmission unit 660.

Referring to Fig. 6, the real-time reference image stream generating unit 600 may include an image storing unit 610, a video encoding unit 620, a PES packetizing unit set 630, a PSI/PSIP generating unit 640, and a multiplexing unit 650. The real-time reference image stream generating unit 600 generates a real-time reference image stream based on the reference image 602 and transmits the generated real-time reference image stream to the receiving side.

First, the image storing unit 610 stores the reference image 602 and an additional image 606. The reference image 602, as described above, is an image for a 3D service and represents a left image of the 3D service. The additional image 606 is a 2D image that constitutes a 3D screen image while interworking with the reference image 602 and represents a 3D right image. The 3D left image and the 3D right image may, as is often case, switch each other. The reference image 602 may be named in an order of broadcast programs and is transmitted to the video encoding unit 620 according to the order.

The reference image 602 may include information indicating a start indicating screen image 604 of a 3D TV. The image storing unit 610 stores the reference image 602 and the additional image 606. The reference image 602 is transmitted to the video encoding unit 620 for generating a real-time reference image stream, and the additional image 606 is transmitted to the additional image and content transmission unit 660 for generating an additional image stream or additional image file. The image storing unit 610 receives synchronization information 608 from a video encoding unit 662 included in the additional image and content transmission unit 660 and stores the synchronization information 608, and transfers the synchronization information 608 to a PES packetizing unit 634.

The video encoding unit 620 receives the reference image 602 from the image storing unit 610 and encodes the received reference image 602 to thereby generate a reference image stream. According to an embodiment of the present invention, the video encoding unit 620 may be an MPEG-2 image encoder and the reference image 602 may be encoded in an MPEG-2 image stream.

The PES packetizing unit set 630 may include two PES packetizing units 632 and 634. The PES packetizing unit 632 receives the reference image stream from the video encoding unit 620 and packetizes the received reference image stream to thereby generate a PES packet. At this time, the PES packetizing unit inserts a 3D start indication screen image 604 in the reference image 602 so that the reference image 602 and the synchronization information 608 may be synchronized with each other with respect to a start time point of 3D broadcast. The 3D start indication screen image allows a user to be able to be aware that the 3D service may be consumed.

The other PES packetizing unit 634 receives the synchronization information 608 from the image storing unit 610 and generates a PES packet based on the received synchronization information. That is, the PES packetizing unit 634 generates a packet different from the PES packet generated in the PES packetizing unit 632, and the synchronization information 608 included therein may be positioned in the payload of the PES packet. Further, the synchronization information 608 may be multiplexed in a separate stream and transmitted to the receiving side.

The PSI/PSIP generating unit 640 receives linkage information 642 from a file/stream generating unit 664 of the additional image and content transmission unit 660 and based on this generates PSI/PSIP. As described above, the PSI/PSIP generating unit 640 may packetize the linkage information 642 so that the linkage information 642 may be included in at least one of a VCT (Virtual Channel Table) or EIT (Event Information Table) of PSIP and a PMT (Program Map Table) of MPEG-2 TS PSI. Here, EIT and PMT may include information relating to interworking of non-real-time content based on a time value that may indicate a proceeding time of a corresponding service and 3D service configuration information.

In particular, PMT may include configuration information of a synchronization information stream and reference image stream, and particularly, stereoscopic_video_info_descriptor may include information on whether a corresponding image is the reference image 602 or the additional image 606 and information on whether the corresponding image is a left image or right image so that the reference image stream and the synchronization information stream may be subjected to different processes, respectively, according to the type of stream.

The multiplexing unit 650 receives a PES packet related to the reference image and a PES packet related to the synchronization information from the PES packetizing unit 632 and PES packetizing unit 634, respectively, and receives the PSI/PSIP from the PSI/PSIP generating unit 640, and multiplexes the received result, thereby generating a real-time reference image stream. At this time, a stream may be included that includes synchronization information separately from the reference image-related stream. The multiplexing unit 650 may generate the real-time reference image stream in the form of an MPEG-2 TS packet.

Although not shown in the drawings, the present invention may include a transmission unit that transmits the real-time reference image stream to the receiving side.

The additional image and content transmission unit 660 may include a video encoding unit 662 and a file/stream generating unit 664.

The additional image and content transmission unit 660 receives the additional image 606 from the image storing unit 610 of the real-time reference image stream generating unit 600 and generates an additional image stream or additional image file based on the received additional image 606, and transmits the generated stream or file to the receiving side in real-time or in non-real-time.

The video encoding unit 662 receives the additional image 606 from the image storing unit 610 and encodes the received additional image to thereby generate a basic stream. The video encoding unit 662 is a component different from the video encoding unit 620 included in the real-time reference image stream generating unit 600 and may adopt an encoder having standards different from those of the video encoding unit 620. The video encoding unit 662 may generate synchronization information 608 for synchronization with the reference image 602 based on the additional image 606. The video encoding unit 662 may transmit the synchronization information 608 to the image storing unit 610.

The file/stream generating unit 664 receives the basic stream encoded in the video encoding unit 662 to thereby generate an additional image file or additional image stream. According to an embodiment of the present invention, the file/stream generating unit 664 may generate the basic stream in the form of an MP4 file. Further, the file/stream generating unit 664 may generate the additional image stream in the form of an MPEG-2 TS packet. While generating the additional image file or additional image stream based on the basic stream, the file/stream generating unit 664 may obtain information of the generated stream or file and may generate linkage information 642 by using, e.g., a specific descriptor based on the obtained information. The generated linkage information 642 is transmitted to the real-time reference image stream generating unit 600, and is included in a real-time reference image stream and transmitted through the PSI/PSIP generating unit 640 and the multiplexing unit 650.

Although not shown in the drawings, the additional image and content transmission unit 660 may further include a transmission unit that transmits the generated additional image stream or additional image file to the receiving side in real-time or in non-real-time.

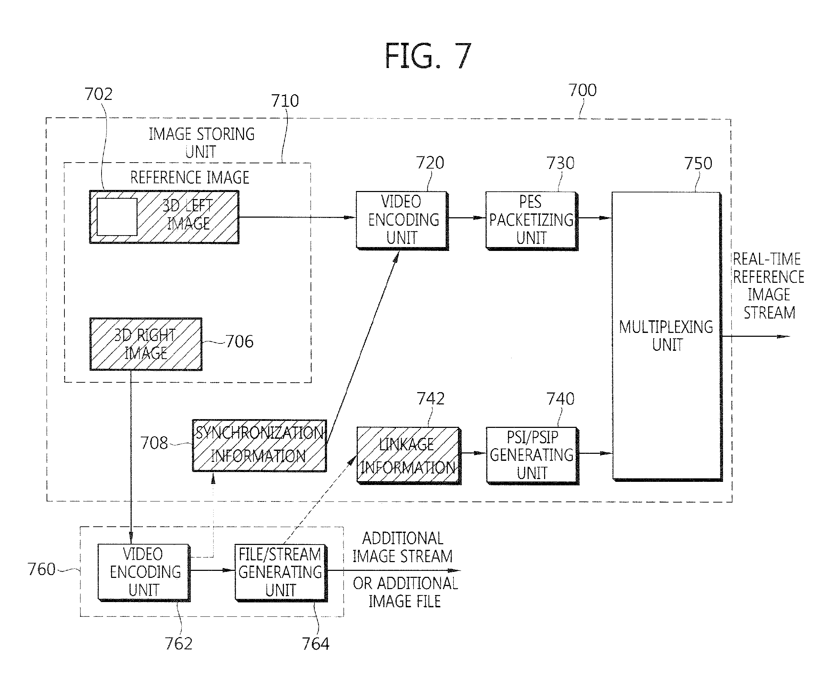

Fig. 7 is a block diagram illustrating a configuration of a transmission apparatus for providing a 3D service while making a real-time transmitted reference image and a separately transmitted additional image and content interwork with each other according to another embodiment of the present invention. As shown in Fig. 7, the transmission apparatus according to the embodiment of the present invention includes a component to allow synchronization information 708 to be transferred through PES private data of the header of a PES packet. Some of the components illustrated in Fig. 7, which are not described, perform the same functions as those in Fig. 6.

Referring to Fig. 7, unlike the embodiment described in connection with Fig. 6, where the synchronization information 608 generated through the video encoding unit 662 of the additional image and content transmission unit 660 based on the additional image 606 and content is positioned in the PES payload through the PES packetizing unit 634 and the PES packetizing unit 632 that generates the PES packet based on the reference image stream, the synchronization information is included in the PES private data of the PES header through a PES packetizing unit 730 that generates a PES packet based on the reference image stream and multiplexed. That is, in such case, since only one PES packetizing unit 730 is enough with no separate packetizing units needed, efficient construction may be achieved. That is, in such case, the synchronization information 708 is included in the reference image stream and transmitted but not in a stream separate from the reference image stream.

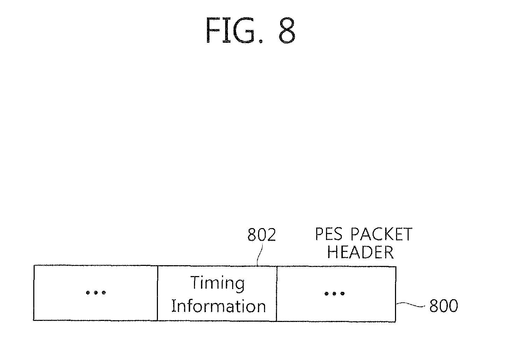

Fig. 8 is a view illustrating an example where synchronization information 802 is included in a PES packet header 800 in a transmission apparatus for providing a 3D service while making a real-time transmitted reference image and a separately transmitted additional image and content interwork with each other according to another embodiment of the present invention.

Referring to Fig. 8, synchronization information 802 is included in the PES packet header 800. As described above, the synchronization information 802 may be included and transmitted in a different way according to real-time stream. The synchronization information 802 may be included in an MPEG-2 image stream or may be defined in the form of a new stream and may be transmitted in the form of a TS packet having a separate PID. However, as shown in Fig. 8, the synchronization information may be included and transmitted in the PES private data of the PES packet header 800.

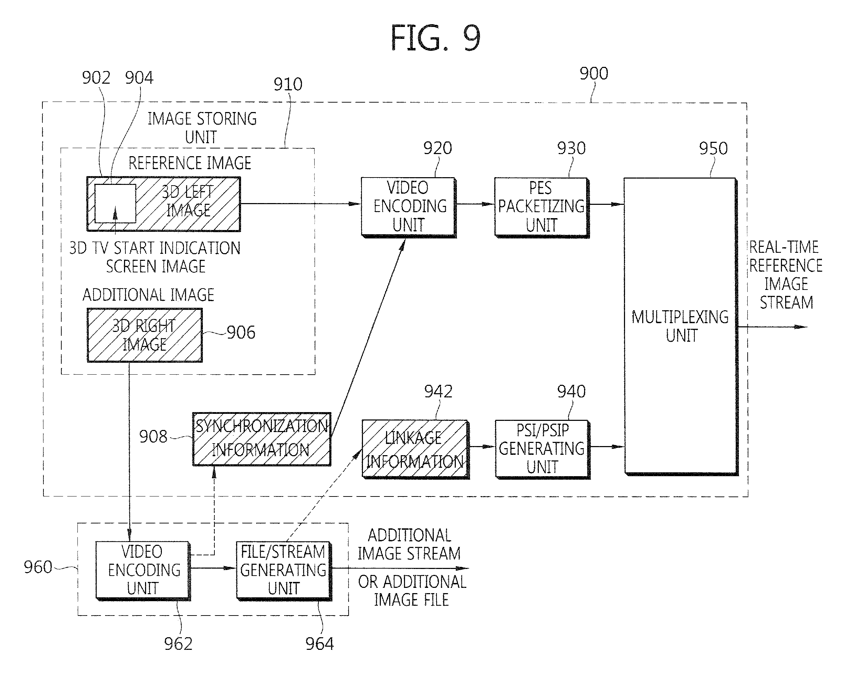

Fig. 9 is a block diagram illustrating a configuration of a transmission apparatus for providing a 3D service while making a real-time transmitted reference image and a separately transmitted additional image and content interwork with each other according to still another embodiment of the present invention. As illustrated in Fig. 9, the transmission apparatus according to this embodiment of the present invention includes a component to allow synchronization information 908 to be included and transmitted in an MPEG-2 video sequence. Some components illustrated in Fig. 9, which are not described, perform the same functions as those in Fig. 6.

Referring to Fig. 9, the synchronization information 908 generated through a video encoding unit 962 based on an additional image 906 is not transmitted to the image storing unit 910 but directly sent to the video encoding unit 920 of the real-time reference image stream generating unit 900. Accordingly, the synchronization information 908 is not positioned in the PES payload of the PES packet nor is it included and transmitted in the PES private data of the PES packet header, but may be included and encoded in a video sequence through the video encoding unit 920. According to an embodiment of the present invention, in the case that the video encoding unit 920 generates an MPEG-2 image stream, the video encoding unit 920 encodes the synchronization information 908 with the synchronization information 908 included in the MPEG-2 video sequence. The encoded MPEG-2 image stream is transmitted to the receiving side via the PES packetizing unit 930 and the multiplexing unit 950.

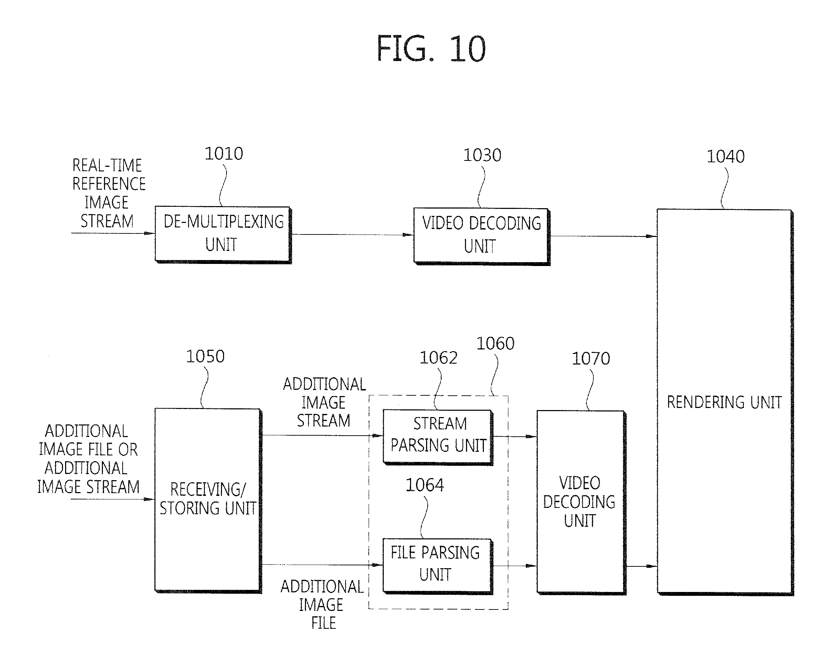

Fig. 10 is a block diagram for describing a process of generating a reference image and an additional image in a receiving apparatus for providing a 3D service while making a real-time transmitted reference image and a separately transmitted additional image and content interwork with each other according to an embodiment of the present invention. As shown in Fig. 10, the receiving apparatus according to an embodiment of the present invention may include a reference image generating unit including a de-multiplexing unit 1010 and a video decoding unit 1030, an additional image generating including a receiving/storing unit 1050, a file/stream parsing unit 1060, and a video decoding unit 1070, and a rendering unit 1040.

Referring to Fig. 10, the reference image generating unit may include the de-multiplexing unit 1010 and the video decoding unit 1030. The reference image generating unit performs de-multiplexing and decoding on a real-time reference image stream received in real-time to thereby generate a reference image of the 3D service. The de-multiplexing unit 1010 receives and demultiplexes the real-time reference image stream to thereby extract the reference image stream, and extracts synchronization information and linkage information. The extracted reference image stream is decoded in the video decoding unit 1030 and is thereby generated as a reference image, and the synchronization information is transmitted to the additional image generating unit and used for decoding the additional image generated based on the additional image stream or additional image file.

The additional image generating unit may include the receiving/storing unit 1050, the file/stream parsing unit 1060, and the video decoding unit 1070. The additional image generating unit receives the additional image stream or additional image file related to the additional image that provides a 3D service in interworking with the reference image in real-time or in non-real-time through a broadcast network or an IP network and decodes the received additional image stream or file, thereby generating an additional image.

The additional image stream or additional image file is received in real-time in the receiving/storing unit 1050, and is not stored but is directly subjected to parsing and decoding processes, and may be thus played back as an image, or may be received in non-real-time and stored in the form of a file, and then may be played back. That is, the additional image stream or additional image file may be received and stored earlier than its corresponding real-time reference image stream.

The file/stream parsing unit 1060 includes a stream parsing unit 1062 and a file parsing unit 1064. The stream parsing unit 1062 performs a function of parsing a stream. That is, the stream parsing unit 1062 may de-multiplex the additional image stream to thereby generate a video ES-type stream. According to an embodiment of the present invention, the stream parsing unit 1062 may generate the video ES-type stream by de-multiplexing an MPEG-2 TS-type additional image stream.

The file parsing unit 1064 may generate a video ES-type stream by parsing a file transmitted in real-time or an additional image file transmitted in non-real-time, i.e., previously transmitted.

At this time, the file/stream parsing unit 1060 parses the synchronization information for synchronization with the reference image and then transfers the video ES-type stream to the video decoding unit 1070 so that the corresponding additional image is decoded at a time point (extracted considering DTS) when the reference image is decoded.

The video ES-type stream thusly generated is decoded in the video decoding unit 1070 and thus becomes an additional image.

The rendering unit 1040 configures a stereoscopic image based on the reference image received from the video decoding unit 1030 and the additional image received from the video decoding unit 1070 of the additional image generating unit and plays back the configured stereoscopic image.

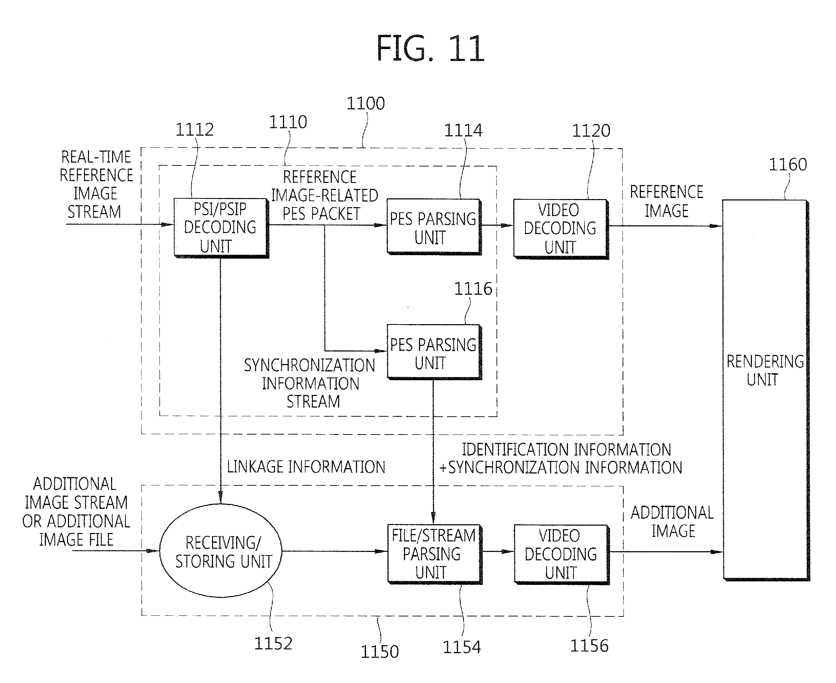

Fig. 11 is a block diagram illustrating a configuration of a receiving apparatus for providing a 3D service in interworking with content received in non-real-time in a real-time broadcast service environment according to an embodiment of the present invention. As shown in Fig. 11, the receiving apparatus according to an embodiment of the present invention may include a reference image generating unit 1100, an additional image generating unit 1150, and a rendering unit 1160.

Referring to Fig. 11, the reference image generating unit 1100 may include a de-multiplexing unit 1110 and a video decoding unit 1120, and the de-multiplexing unit 1110 may include a PSI/PSIP decoding unit 1112, a PES parsing unit 1114, and a PES parsing unit 1116. The reference image generating unit 1100 performs de-multiplexing and decoding on a real-time reference image stream received in real-time to thereby generate a reference image for the 3D service.

First, the PSI/PSIP decoding unit 1112 extracts a PSI/PSIP stream included in the real-time reference image stream. The PSI/PSIP decoding unit 1112 extracts a PES packet, synchronization information stream and linkage information which are related to the reference image, through an linkage descriptor and configuration information of the reference image stream and synchronization information stream. The reference image-related PES packet is transmitted to the PES parsing unit 1114, and the synchronization information stream is transmitted to the PES parsing unit 1116, and the linkage information is transmitted to the receiving/storing unit 1152 of the additional image generating unit 1150.

The configuration information of the reference image stream and the synchronization information is included in the PMT. The PSI/PSIP decoding unit 1112 analyzes stereoscopic_video_info_descriptor of the PMT to identify whether the corresponding image is the reference image or additional image and whether the corresponding image is the left or right image.

The PES parsing unit 1114 receives the PES packet related to the reference image from the PSI/PSIP decoding unit 1112 and parses the PES packet to thereby generate the reference image stream configured as video ES. That is, the PES parsing unit 1114 configures the reference image stream as the video ES based on the PES packet and transmits the result to the video decoding unit 1120 when as defined in the existing broadcast standards DTS (Decoding Time Stamp) and PCR (Program Clock Reference) are identical in value to each other. According to an embodiment of the present invention, the reference image stream may be an MPEG-2 image stream.

Meanwhile, the stream including the synchronization information is transmitted to the PES parsing unit 1116. The PES parsing unit 1116 extracts the synchronization information for configuring a 3D screen image from the synchronization information stream. The PES parsing unit 1116 transmits the synchronization information at a time point corresponding to the DTS of the reference image to the file/stream parsing unit 1154 of the additional image generating unit 1150.

The video decoding unit 1120 receives the reference image stream from the PES parsing unit 1114 and decodes the received reference image stream to thereby generate the reference image. The video decoding unit 1120 may generate the reference image based on the MPEG-2 image stream. The video decoding unit 1120 decodes the corresponding image at a time point indicated by DTS of PMT.

The additional image generating unit 1150 may include a receiving/storing unit 1152, a file/stream parsing unit 1154, and a video decoding unit 1156. The additional image generating unit 1150 receives a stream or file related to the additional image providing the 3D service in interworking with the reference image and decodes the received stream or file to thereby generate the additional image.

The additional image stream and additional image file are received and stored in the receiving/storing unit 1152. The stream may be received in real-time and, without being stored, directly decoded, and the file may be previously received and stored in the form of a file. The receiving/storing unit 1152 receives linkage information from the PSI/PSIP decoding unit 1112 and matches the stream and file indicated by the linkage information with the received additional image stream and file. A plurality of additional image streams and files may match the refe1rence image through analysis of the linkage information.

According to an embodiment of the present invention, linkage URL information 270 and linkage media type information 280 of the linkage information may be analyzed so that a file to interwork, which is stored in the receiving/storing unit 1152, may be identified.

The file/stream parsing unit 1154 receives the file and stream identification information and synchronization information from the PES parsing unit 1116 of the reference image generating unit 1100 and parses the additional image and stream that match the reference image to thereby generate a video ES-type stream and transfers the generated video ES-type stream to the video decoding unit 1156. The file/stream parsing unit 1154 parses the synchronization information for synchronization with the reference image and then transfers the video ES-type stream to the video decoding unit 1156 so that a corresponding additional image is decoded at a time point (extracted considering DTS) when the reference image is decoded.

The video decoding unit 1156 receives the video ES-type stream generated based on the additional image stream and file from the file/stream parsing unit 1154 and decodes the received video ES-type stream to thereby generate an additional image. The generated additional image is transferred to the rendering unit 1160. The video decoding unit 1156 may be the same as or different from the video decoding unit 1120 of the reference image generating unit 1100. That is, one video decoding unit may decode both the reference image stream and the additional image file.

The rendering unit 1160 configures a stereoscopic image based on the reference image received from the video decoding unit 1120 of the reference image generating unit 1100 and the additional image received from the video decoding unit 1156 of the additional image generating unit 1150 and plays back the configured stereoscopic image.

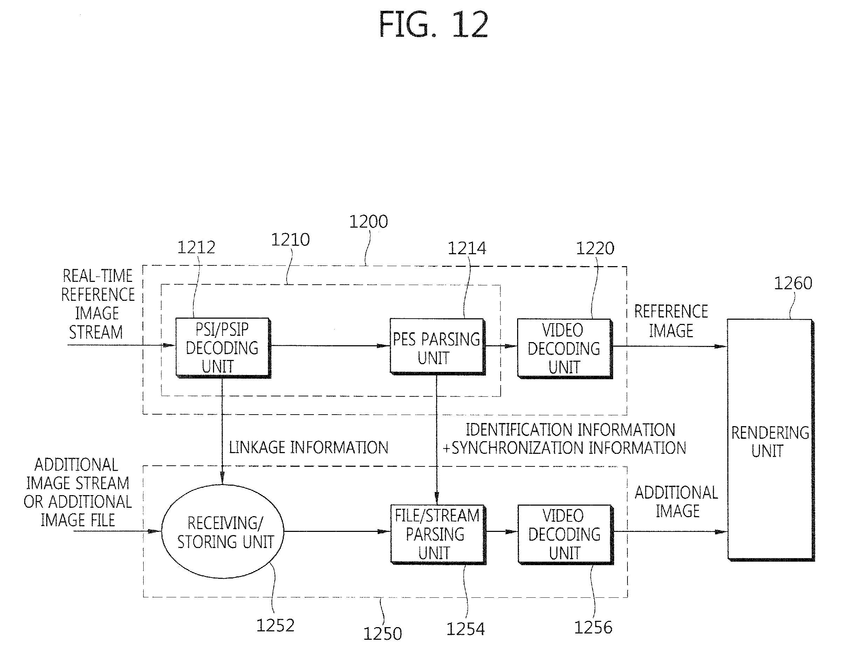

Fig. 12 is a block diagram illustrating a configuration of a receiving apparatus for providing a 3D service in interworking with content received in non-real-time in a real-time broadcast service environment according to another embodiment of the present invention. As shown in Fig. 12, the receiving apparatus according to this embodiment of the present invention includes a component that receives synchronization information transferred through PES private data and plays back a stereoscopic image. Some of the components illustrated in Fig. 12, which are not described, perform the same functions as those in Fig. 11.

Referring to Fig. 12, a de-multiplexing unit 1210 includes a PSI/PSIP decoding unit 1212 and a PES parsing unit 1214 but does not include a separate PES parsing unit. That is, although the embodiment described in connection with Fig. 11 includes a separate PES parsing unit that parses a new synchronization information stream for transferring synchronization information, in the embodiment described in connection with Fig. 12, the synchronization information may be extracted by analyzing private data of the header of the PES packet 1214 that generates the reference image stream. The extracted synchronization information is transferred to the file/stream parsing unit 1254.

The file/stream parsing unit 1254 parses the synchronization information and transfers a stream relating to an image matching the reference image to the video decoding unit 1256. The image decoded in the video decoding unit 1256 is configured as a stereoscopic image through the rendering unit 1260 and played back.

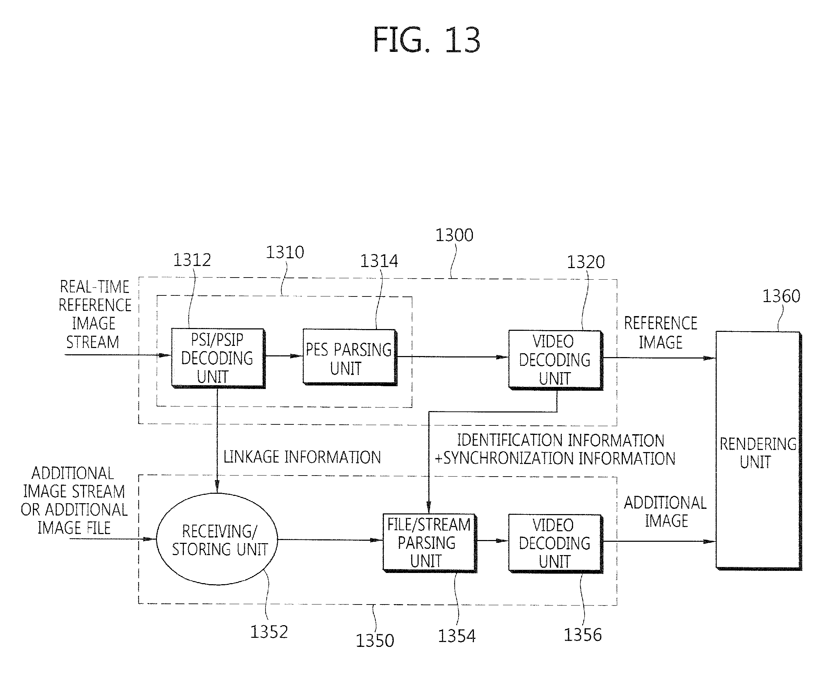

Fig. 13 is a block diagram illustrating a configuration of a receiving apparatus for providing a 3D service in interworking with content received in non-real-time in a real-time broadcast service environment according to still another embodiment of the present invention. As shown in Fig. 13, the receiving apparatus according to this embodiment of the present invention includes a component that receives synchronization information transferred through a stream included in an MPEG-2 video sequence and plays back a stereoscopic image. Some of the components illustrated in Fig. 13, which are not described, perform the same functions as those in Fig. 11.

Referring to Fig. 13, like in the embodiment described in connection with Fig. 12, the de-multiplexing unit 1310 includes a PSI/PSIP decoding unit 1312 and a PES parsing unit 1314 but does not include a separate PES parsing unit. In the embodiment described in connection with Fig. 13, the synchronization information is included in each MEPG-2 video sequence, and thus, the video decoding unit 1320 extracts the synchronization information from each MPEG-2 video sequence. The extracted synchronization information is transmitted to the file/stream parsing unit 1354.

The file/stream parsing unit 1354 parses the synchronization information and transmits a stream relating to an image matching the reference image to the video decoding unit 1356. The image decoded in the video decoding unit 1356 is configured as a stereoscopic image through the rendering unit 1360 and played back.

Although the embodiments of the present invention have been described with reference to the accompanying drawings, the scope of the invention is not limited thereto, and it is understood by those skilled in the art that various changes, modifications, or alterations may be made to the invention without departing from the scope and spirit of the invention.

## Claims

1. A transmission method for providing a 3D service while making a reference image transmitted in real-time interwork with an additional image and content transmitted separately from the reference image, the transmission method comprising:
a real-time reference image stream generating step of generating a real-time reference image stream based on a reference image and transmitting the generated real-time reference image stream to a receiving side in real-time; and
an additional image transmitting step of transmitting the additional image providing the 3D service by linking up the reference image to the receiving side separately from the reference image stream, wherein the real-time reference image stream includes linkage information, which links up the additional image with the reference image, and synchronization information for synchronization with the reference image and the additional image.

2. The transmission method of claim 1, wherein the additional image is transmitted in real-time or in non-real-time in the form of a stream or a file.

3. The transmission method of claim 1, wherein the linkage information includes at least one of:
a descriptor tag (descriptor_tag) for identifying an linkage descriptor which is a descriptor relating to the linkage information;
descriptor length information (descriptor_length) indicating a length of the linkage descriptor;
linkage media count information (linkage_media_number) indicating the number of files and streams to be interworking, which are included in the linkage descriptor;
media index id information (media_index_id) which is an id value that may identify the file and stream to be interworking;
wakeup time information (start_time) indicating a service start time of the file and stream to be interworking;
linkage URL information (linkage_URL) indicating URL information of the file and stream to be interworking;
URL length information (linkage_URL_length) indicating a length of the URL information; and
linkage media type information (linkage_media_type) indicating the type of the file and stream to be interworking.

4. The transmission method of claim 1, wherein the synchronization information includes at least one of:
a synchronization information identifier which is information for identifying the synchronization information;
a 3D discerning flag (2D_3D_flag) for discerning whether the type of a service currently supported by a broadcast stream is in 2D or in 3D;
media index id information (media_index_id) which is an id value that may identify the file and stream to be interworking; and
frame number information (frame_number) indicating a counter value for figuring out a playback time for interworking between the reference image and the additional image and content.

5. The transmission method of claim 1, wherein the real-time reference image stream generating step includes:
a video encoding step of encoding the reference image to generate a reference image stream;
a PES packetizing step of packetizing the reference image stream to generate a PES packet;
a PSi/PSIP generating step of generating a PSI/PSIP (Program Specific Information/Program and System Information Protocol) based on the linkage information; and
a multiplexing step of multiplexing the PSI/PSIP and the PES packet to generate the real-time reference image stream.

6. The transmission method of claim 5, wherein the video encoding step includes a step of encoding the reference image to generate an MPEG-2 image stream, wherein the multiplexing step includes a step of multiplexing the PSI/PSIP and the PES packet to generate an MPEG-2 TS stream.

7. The transmission method of claim 1, wherein the additional image transmitting step includes,
a video encoding step of encoding the additional image to generate a basic stream; and
a file/stream generating step of generating an additional image file or an additional image stream to be appropriate for a transmission type based on the basic stream, wherein the video encoding step or the file/stream generating step includes a step of generating the synchronization information or a step of generating the linkage information.

8. The transmission method of claim 7, wherein the file or stream generating step includes a step of generating the basic stream in one of an MP4 format and a TS format, wherein the generated additional image file or additional image stream is transmitted to the receiving side in real-time or in non-real-time.

9. The transmission method of claim 1, wherein the synchronization information is packetized by a first PES packetizing means that packetizes the reference image stream and a separate PES packetizing means different from the first PES packetizing means and transmitted in a separate stream or is included in a header of the PES packet through the first PES packetizing means or packetized or is included in a video sequence and encoded.

10. The transmission method of claim 1, wherein the reference image is packetized together with information that may identify a start time point of the 3D service for synchronization between the reference image and the synchronization information.

11. The transmission method of claim 1, wherein the linkage information is included in at least one of a VCT (Virtual Channel Table) and an EIT (Event Information Table) of a PSIP of the real-time reference image stream and a PMT (Program Map Table) of an MPEG-2 TS PSI.

12. A transmission apparatus for providing a 3D service while making a reference image transmitted in real-time interwork with an additional image and content transmitted separately from the reference image, the transmission apparatus comprising:
a real-time reference image stream generating unit generating a real-time reference image stream based on a reference image and transmitting the generated real-time reference image stream to a receiving side in real-time; and
an additional image transmitting unit transmitting the additional image providing the 3D service by linking up with the reference image to the receiving side separately from the reference image stream, wherein the real-time reference image stream includes a linkage information, which links up the additional image with the reference image, and synchronization information for synchronization with the reference image and the additional image and content.

13. The transmission apparatus of claim 12, wherein the additional image is transmitted in real-time or in non-real-time in the form of a stream or a file.

14. A reception method for providing a 3D service while making a reference image transmitted in real-time interwork with an additional image and content transmitted separately from the reference image, the reception method comprising:
a reference image generating step of performing de-multiplexing and decoding on a real-time reference image stream received in real-time to generate a reference image of the 3D service;
an additional image generating step of receiving an additional image stream or an additional image file relating to the additional image providing the 3D service by linking up with the reference image separately from the reference image stream and decoding the received additional image stream or additional image file to thereby generate the additional image; and
a rendering step of rendering a 3D stereoscopic image based on the reference image and the additional image, wherein the reference image generating step and the additional image generating step includes a step of performing decoding while synchronization is done based on a linkage information which links up the additional image with the reference image and synchronization information for synchronization with between the reference image and the additional image, which are included in the real-time reference image stream.

15. The reception method of claim 14, wherein the reference image generating step includes,
a PSI/PSIP decoding step of decoding a PSI/PSIP (Program Specific Information/Program and System Information Protocol) included in the real-time reference image stream to extract a PES packet and the linkage information;
a PES parsing step of parsing the PES packet to generate a reference image stream constituted of a video ES; and
a video decoding step of decoding the reference image stream to generate the reference image.

16. The reception method of claim 15, wherein the synchronization information is obtained from the synchronization information stream through a first PES parsing means that parses the PES packet to generate the reference image stream and a separate parsing means different from the first PES parsing means, obtained by a header of the PES packet through the first PES parsing means, or obtained from the reference image stream.

17. The reception method of claim 15, wherein the PSI/PSIP decoding step includes a step of analyzing configuration information of the reference image stream included in a PMT (Program Map Table) of a PSI/PSIP included in the real-time reference image stream, extracting information on whether a corresponding image is the reference image or the additional image and information on whether the corresponding image is a left or right image, and extracting the linkage information through an linkage descriptor included in at least one of a VCT (Virtual Channel Table) and an EIT (Event Information Table) of the PSIP and a PMT of an MPET-2 TS PSI.

18. The reception method of claim 14, wherein the additional image generating step includes,
a receiving/storing step of receiving and storing the additional image stream or the additional image file and the linkage information;
a file/stream parsing step of receiving the synchronization information generated in the reference image generating step and generating a video ES-type basic stream based on one of an additional image stream and file relating to the additional image matching the reference image; and
a video decoding step of decoding the generated video ES-type basic stream to generate the additional image.

19. The reception method of claim 18, wherein the receiving/storing step includes a step of identifying the stream and file to be interworking through linkage media type information (linkage_media_type) indicating the type of the stream and file to be interworking of the linkage information and linkage URL information (linkage_URL) indicating URL information storing the stream and file to be interworking.

20. A reception apparatus for providing a 3D service while making a reference image transmitted in real-time interwork with an additional image and content transmitted separately from the reference image, the reception apparatus comprising:
a reference image generating unit performing de-multiplexing and decoding on a real-time reference image stream received in real-time to generate a reference image of the 3D service;
an additional image generating unit receiving an additional image stream or an additional image file relating to the additional image providing the 3D service by linking upwith the reference image separately from the reference image stream and decoding the received additional image stream or additional image file to thereby generate the additional image; and
a rendering unit rendering a 3D stereoscopic image based on the reference image and the additional image, wherein the reference image generating unit and the additional image generating unit perform decoding while synchronization is done based on a linkage information which links up the additional image with the reference image and synchronization information for synchronization with between the reference image and the additional image, which are included in the real-time reference image stream.
